# EUROPÄISCHE PATENTSCHRIFT

(11) **EP 1 795 780 B1**
(45) Veröffentlichungstag und Bekanntmachung des Hinweises auf die Patenterteilung: **17.03.2010**
(21) Anmeldenummer: 06024488.6
(22) Anmeldetag: 25.11.2006
(51) Int. Cl.: F16H 45/02

(54) **Torsionsschwingungsdämpfer einer hydrodynamischen Kopplungsanordnung**
Torsional vibration damper for a hydrodynamic coupling device
Amortisseur de vibrations torsionelles pour convertisseur hydrodynamique

(30) Priorität: 09.12.2005 DE 102005058783
(43) Veröffentlichungstag der Anmeldung: 13.06.2007
(60) Teilanmeldung: 09006504.6
(73) Patentinhaber: ZF Friedrichshafen AG, 88046 Friedrichshafen (DE)
(72) Erfinder: Wack, Erwin, 97464 Niederwerrn (DE); Sasse, Christoph, Dr., 97422 Schweinfurt (DE); Sudau, Jörg, 97464 Niederwerrn (DE)

(56) Entgegenhaltungen:
- EP-A2- 0 744 563
- DE-A1- 3 240 238
- DE-A1- 10 358 901
- FR-A1- 2 568 638
- GB-A- 2 098 702
- US-A- 4 138 003

## Beschreibung

Die Erfindung bezieht sich auf Torsionsschwingungsdämpfer an einer Überbrückungskupplung einer hydrodynamischen Kupplungsanordnung entsprechend dem Oberbegriff des Anspruches 1,

Solche Torsionsschwingungsdämpfer sind aus dem Stand der Technik bekannt. So zeigt beispielsweise die DE 103 58 901 A1 eine hydrodynamische Kopplungsanordnung, die, als Drehmomentwandler realisiert, mit einer Überbrückungskupplung ausgebildet ist, deren Kolben an seiner dem Kupplungsgehäuse zugewandten Seite mit einer Reibfläche versehen ist, über welche er mittels einer Zwischenlamelle mit einer am Kupplungsgehäuse vorgesehenen Gegenreibfläche in Reibverbindung bringbar ist. Die Überbrückungskupplung stellt eine Wirkverbindung zwischen dem mit einem Antrieb, wie der Kurbelwelle einer Brennkraftmaschine, drehfesten Kupplungsgehäuse und dem Torsionsschwingungsdämpfer her, indem ein antriebsseitiges Übertragungselement des letztgenannten drehfest, aber axial verschiebbar, an der Zwischenlamelle angreift. Das antriebsseitige Übertragungselement bildet gemeinsam mit Energiespeichern einer antriebsseitigen Energiespeichergruppe und mit als Zwischen-Übertragungselement des Torsionsschwingungsdämpfers dienenden Deckblechen eine antriebsseitige Dämpfungseinrichtung. Die Deckbleche, die axial zueinander beabstandet sind, bilden ihrerseits zusammen mit Energiespeichern einer abtriebsseitigen Energiespeichergruppe und mit einem abtriebsseitigen Übertragungselement eine abtriebsseitige Dämpfungseinrichtung. Diese steht mit einem abtriebsseitigen Bauteil, wie einer Getriebeeingangswelle, in drehfester Verbindung.

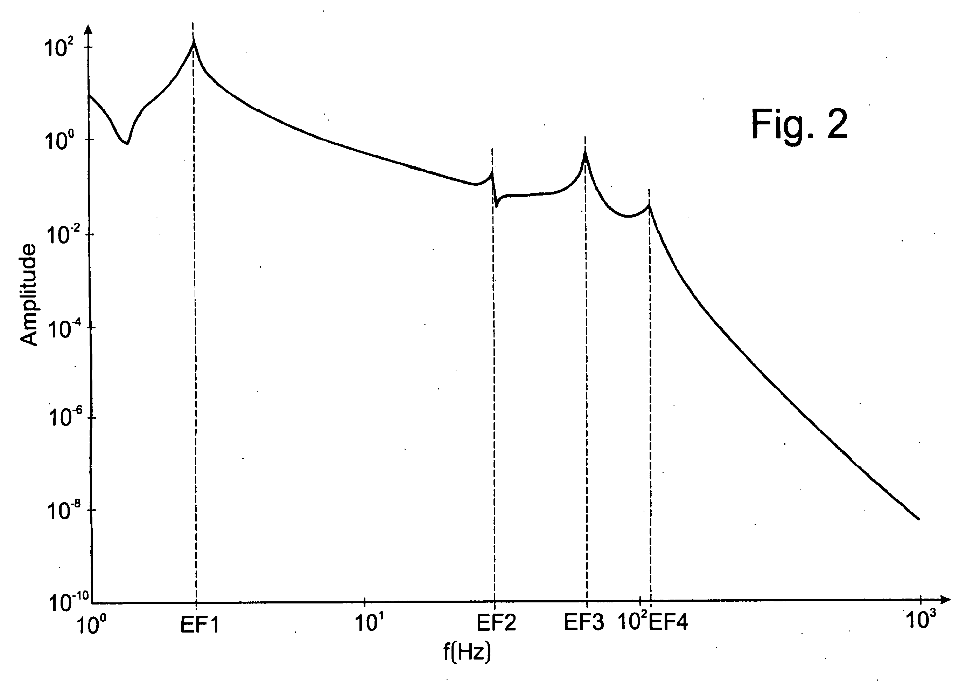

Der Antriebsstrang eines Kraftfahrzeugs kann, bei Betrachtung als freies Schwingungssystem mit einer hydrodynamischen Kupplungsanordnung, grob auf sechs Massen reduziert werden, wobei der Antrieb mit einem Pumpenrad als erste Masse, das Turbinenrad als zweite Masse, die Getriebeeingangswelle als dritte Masse, die Kardanwelle und das Differential als vierte Masse, die Räder als fünfte Masse und das Gesamtfahrzeug als sechste Masse angenommen werden. Bei einem freien Schwingungssystem mit n=sechs Massen treten bekanntermaßen n-1 Eigenfrequenzen, mithin also fünf Eigenfrequenzen, auf, von denen die erste die Rotation des gesamten Schwingungssystems betrifft und im Hinblick auf Schwingungsdämpfung nicht relevant ist. Die Drehzahlen, bei welchen die Eigenfrequenzen angeregt werden, sind von der Zylinderzahl des als Brennkraftmaschine ausgebildeten Antriebs abhängig. In Fig. 2 ist schematisch ein Diagramm zur logarithmischen Darstellung des Amplitudenfrequenzganges am Turbinenrad einer hydrodynamischen Kupplungsanordnung abgebildet.

Zugunsten eines möglichst geringen Kraftstoffverbrauchs besteht die Tendenz, eine Überbrückungskupplung schon bei sehr niedriger Drehzahl zu schließen, um schlupfbedingte Verluste im hydrodynamischen Kreis so gering wie möglich zu halten.

Für die Überbrückungskupplung bedeutet dies, dass sie bei einer Frequenz geschlossen wird, die zwar oberhalb der ersten und zweiten Eigenfrequenz EF 1 und EF 2, aber noch unterhalb der dritten und vierten Eigenfrequenz EF 3 und EF 4 liegt. Während die ersten beiden Eigenfrequenzen EF 1 und EF 2 im hydrodynamischen Kreis der hydrodynamischen Kopplungsanordnung dämpfbar sind, kann der Antriebsstrang beim Durchfahren der dritten und vierten Eigenfrequenz EF 3 und EF 4 zu unerwünschten Geräuschen angeregt werden, wobei insbesondere die dritte Eigenfrequenz EF 3 noch sehr große Amplituden haben kann.

Zurückkommend auf die DE 103 58 901 A1, weist der Torsionsschwingungsdämpfer beispielsweise gemäß Fig. 1 zwei Dämpfungseinrichtungen auf, von denen die antriebsseitige mit der Zwischenlamelle als einem Bauteil der Überbrückungskupplung und die abtriebsseitige mit der Getriebeeingangswelle als einem abtriebsseitigen Bauteil der hydrodynamischen Kupplungsanordnung in Drehverbindung steht. Wirkungsmäßig zwischen den beiden Dämpfungseinrichtungen ist das Turbinenrad als Masseelement an das Zwischen-Übertragungselement angeschlossen.

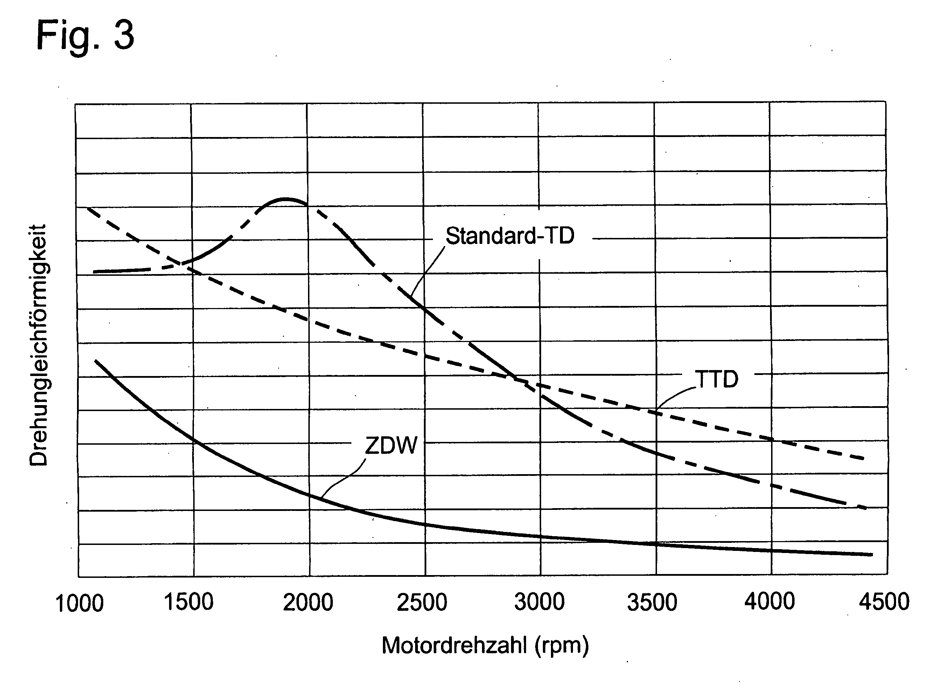

Aufgrund einer derartigen Anbindung des Turbinenrades wirkt die antriebsseitige Dämpfungseinrichtung als ein Torsionsschwingungsdämpfer (TD), der in Fachkreisen als "Standard-TD" bezeichnet ist und, für sich gesehen, über den in Fig. 3 eingezeichneten Dämpfungsverlauf verfügen würde. Ein Standard-TD würde bei dem in Fig. 2 schematisch in logarithmischer Darstellung abgebildeten Amplitudenfrequenzgang am Turbinenrad einer hydrodynamischen Kupplungsanordnung sowohl die Amplitude der dritten Eigenfrequenz EF 3 als auch die Amplitude der vierten Eigenfrequenz EF 4 senken. Deutlich verbliebe allerdings für die dritte Eigenfrequenz EF3 eine Überhöhung der Drehungleichförmigkeit im Drehzahlbereich von etwa 1500 Umdrehungen pro Minute, wie aus Fig. 3 erkennbar ist.

Da bei dem Torsionsschwingungsdämpfer nach der DE 103 58 901 A1 die abtriebsseitige Dämpfungseinrichtung mit ihrem abtriebsseitigen Übertragungselement zu einer Relativdrehung gegenüber dem am Zwischen-Übertragungselement befestigten Turbinenrad befähigt ist, wirkt die abtriebsseitige Dämpfungseinrichtung als ein in Fachkreisen als "Turbinentorsionsdämpfer TTD" bezeichneter Torsionsschwingungsdämpfer, der, für sich gesehen, den in Fig. 3 eingezeichneten Dämpfungsverlauf ergeben würde, bei welchem die sich durch die dritte Eigenfrequenz EF3 ergebende Überhöhung der Drehungleichförmigkeit in einen Bereich um etwa 1000 Umdrehungen pro Minute verlagern und daher im üblichen Drehzahlbereich nur noch wenig stören würde.

Abweichend zu den vorangehenden Ausführungen ergibt sich bei dem Torsionsschwingungsdämpfer nach der DE 103 58 901 A1, der in Fachkreisen als "Zweidämpferwandler ZDW" bezeichnet ist, die Wirkung, dass durch die als Standard-TD geschaltete antriebsseitige Dämpfungseinrichtung die Eigenfrequenzen EF 3 und EF 4 reduziert werden, und durch die als TTD geschaltete abtriebsseitige Dämpfungseinrichtung die hiervon störendere Eigenfrequenz EF 3 zu einer niedrigeren Drehzahl verlagert wird, bei welcher diese eine kaum noch wahrnehmbare Störwirkung entfaltet. Damit ist mit dem ZDW der in Fig. 3 eingezeichnete Dämpfungsverlauf erzielbar.

Ein derartiger Dämpfungsverlauf wird bei modernen Fahrzeugen angestrebt, damit diese auch in dem für den Verbrauch relevanten unteren Teillastbereich mit vollständig eingerückter Überbrückungskupplung betrieben werden können, ohne hierbei Nachteile in Form störender Schwingungen oder Geräusche in Kauf nehmen zu müssen. Sofern allerdings die Überbrückungskupplung bereits bei Drehzahlen in der Größenordnung von 1000 Umdrehungen/Minute geschlossen werden soll, kann selbst der durch ein ZDW bewirkte Dämpfungsverlauf unzureichend sein.

Ein weiterer Torsionsschwingungsdämpfer in einer als Drehmomentwandler realisierten hydrodynamischen Kopplungsanordnung ist aus der gattungsbildenden FR 2 568 638 A1 bekannt. Bevor im einzelnen zu dieser Veröffentlichung Stellung genommen wird, soll festgestellt werden, dass bei dem darin offenbarten Torsionsschwingungsdämpfer zwar jeweils zwei Energiespeichergruppen vorgesehen sind, dass dieser Torsionsschwingungsdämpfer aber nicht als ZDW, wie zuvor ausführlich dargelegt, aufgebaut ist, und daher nicht den mit einem ZDW erzielbaren, vorteilhaften Dämpfungsverlauf zu bieten vermag.

Der in der FR 2 568 638 A1 behandelte Torsionsschwingungsdämpfer zeigt zwei Energiespeichergruppen, von denen jede über Energiespeicher jeweils zweier unterschiedlicher Federsteifigkeiten verfügt. Bei Einleitung kleiner Momente in den Torsionsschwingungsdämpfer werden jeweils erste Energiespeicher beider Energiespeichergruppen verformt, wobei allerdings nur eine geringe Relativdrehauslenkung zustande kommt, da die ersten Energiespeicher der abtriebsseitigen Energiespeichergruppe über eine vergleichsweise hohe Federsteifigkeit verfügen. Die Einleitung stärkerer Momente hat bei weiterer Relativdrehauslenkung eine Verformung der zweiten Energiespeicher der antriebsseitigen Energiespeichergruppe zur Folge. Noch höhere Momente führen schließlich zur Überbrückung der antriebsseitigen Energiespeichergruppe durch einen Drehwinkelanschlag, so dass bei weiterem Anstieg eingeleiteter Momente lediglich noch die abtriebsseitige Energiespeichergruppe eine Dämpfungswirkung erzielt, dann allerdings mit beiden Energiespeichern.

Der Erfindung liegt die Aufgabe zugrunde, einen Torsionsschwingungsdämpfer an einer Überbrückungskupplung einer hydrodynamischen Kopplungsanordnung mit zumindest zwei Dämpfungseinrichtungen so auszubilden, dass unerwünschte Schwingungen oder Geräusche nicht mehr störend in Erscheinung treten.

Diese Aufgabe wird durch die Merkmale des Anspruches 1 gelöst.

Ausgangspunkt der Erfindung ist ein Torsionsschwingungsdämpfer mit wenigstens zwei Energiespeichergruppen, von denen eine erste Energiespeichergruppe, vorzugsweise die antriebsseitige Energiespeichergruppe, wenigstens zwei unterschiedliche Energiespeicher zur Erzeugung einer Kennlinie mit mindestens zwei Kennlinienabschnitten aufweist. Eine zweite Energiespeichergruppe des Torsionsschwingungsdämpfers, vorzugsweise die abtriebsseitige Energiespeichergruppe, weist wenigstens zwei unterschiedliche Energiespeicher zur Erzeugung einer Kennlinie mit mindestens zwei Kennlinienabschnitten auf.

Bei der Ausführung des Torsionsschwingungsdämpfers gemäß Anspruch 1 wird dafür gesorgt, dass zwischen den jeweils ersten Energiespeichern aller Energiespeichergruppen ein vorbestimmtes Steifigkeitsverhältnis SV gebildet wird. Durch Auslegung der jeweils ersten Kennlinienabschnitte der Kennlinien beider Energiespeichergruppen derart, dass diese bei unterschiedlichen Momentenbeträgen ME1, ME2 enden, erfolgt der Übergang zwischen den jeweils ersten Energiespeichern geringerer Steifigkeit beider Kennlinien auf die jeweils zweiten Energiespeicher größerer Steifigkeit beider Kennlinien, ohne dass bei der sich aus den beiden Kennlinien ergebenden resultierenden Kennlinie, nachfolgend als Summenkennlinie bezeichnet, eine Knickstelle oder ein Bereich mit einer deutlich wahrnehmbaren Diskontinuität ergibt. Dies wirkt sich insbesondere dann vorteilhaft aus, wenn an dem Torsionsschwingungsdämpfer ein Drehmoment in derjenigen Größenordnung anliegt, das mit dem Ende zumindest eines der jeweils ersten Kennlinienabschnitte sowie mit dem Anfang zumindest eines der jeweils zweiten Kennlinienabschnitte übereinstimmt, und bei einer geringen Momentenänderung auf den jeweils anderen Kennlinienabschnitt dieser Kennlinie wechselt. Besonders häufig würde sich dieser Wechsel des jeweils wirksamen Kennlinienabschnittes ergeben, wenn einem Drehmoment in der besagten Größenordnung eine Torsionsschwingung wechselnden Vorzeichens überlagert ist. Ergänzend oder alternativ kann durch entsprechende Auslegung der Kennlinien dafür gesorgt werden, dass der jeweilige Knickpunkt zwischen den beiden Kennlinienabschnitten bei einem für den Verbrauch relevanten Teillastbereich anliegt, der üblicherweise bei einer Drosselklappenstellung zwischen 25% und 50% Öffnungswinkel anhängig ist. Bei einer derartigen Auslegung können die vorgenannten Torsionsschwingungen keinen Wechsel zwischen den beiden Kennlinienabschnitten herbeiführen.

Vorteilhafterweise liegt der höhere Momentenwert in einem Bereich zwischen 110% und 120% des vom Antrieb lieferbaren Moments, der geringere Momentenwert dagegen in einem Bereich zwischen 80% und 100% dieses Moments. Der geringere Momentenwert ist demnach mit Vorzug in einem Bereich zwischen 10% und 40% unterhalb des höheren Momentenwertes angesiedelt.

Eine derartige Auslegung der entsprechenden Momentenwerte ist bei Ausführung des Torsionsschwingungsdämpfers nach Anspruch 1 vorteilhaft. Der höhere Momentenwert ME4 ist im Fall dieser Ausführung dem zweiten Kennlinienabschnitt der zweiten Kennlinie der Energiespeichergruppe mit der höheren Steifigkeit zugeordnet, der geringere Momentenwert dagegen dem zweiten Kennlinienabschnitt der ersten Kennlinie (Momentenwert ME3), also der Energiespeichergruppe mit der geringeren Steifigkeit.

Es kann aber auch eine entgegengesetzte Auslegung der beiden Energiespeichergruppen zueinander erfolgen und vorteilhaft sein.

Durch Ausbildung der zur Aufnahme von Energiespeichern mit unterschiedlichen Steifigkeiten vorgesehenen Ausnehmungen des Zwischen-Übertragungselementes sowie des abtriebsseitigen Übertragungselementes der abtriebsseitigen Dämpfungsvorrichtung mit unterschiedlichen Distanzwinkelbereichen (ϕ1, ϕ2) zueinander zur Erzeugung unterschiedlich breiter Stege zwischen jeweils zwei Ausnehmungen wird für eine gleichmäßigere Materialbelastung an den Stegen gesorgt, und zwar insbesondere in demjenigen Bereich derselben, an welchem sich das entsprechende Ende des jeweiligen Energiespeichers abstützt, demnach also angrenzend an die jeweils in Drehmomentübertragungsrichtung vorausgehende Ausnehmung, was insbesondere bei dem abtriebsseitigen Übertragungselement von erheblicher Bedeutung ist. Hierbei werden durch die anspruchsgemäße Maßnahme diejenigen Stege, die zur Aufnahme der dem ersten Kennlinienabschnitt zugeordneten Energiespeicher geringerer Steifigkeit dienen, zur Verschmalerung durch einen geringeren Distanzwinkelbereich (ϕ1) zwischen den Ausnehmungen aneinander angenähert, während die anderen Stege, die zur Aufnahme der dem zweiten Kennlinienabschnitt zugeordneten Energiespeicher höherer Steifigkeit vorgesehen sind, zur Verbreiterung durch einen größeren Distanzwinkelbereich (ϕ2) zwischen den Ausnehmungen weiter voneinander beabstandet sind. Diese Auslegung der Stege erfolgt jeweils für die Wirkrichtung der Energiespeicher bei Zugbetrieb, da nur hierbei die anliegenden Momente den jeweils maximalen Betrag annehmen können.

Die Erfindung ist anhand von Ausführungsbeispielen näher erläutert. Es zeigt:
- Fig. 1:: die obere Hälfte eines Längsschnittes durch eine hydrodynamische Kupplungsanordnung mit einer Überbrückungskupplung und einem Torsionsschwingungsdämpfer, der über zwei Energiespeichergruppen verfügt;
- Fig.2:: ein schematisches Diagramm zur logarithmischen Darstellung des Amplitudenfrequenzganges am Turbinenrad der hydrodynamischen Kupplungsanordnung;
- Fig. 3:: eine schematische Darstellung des Drehungleichförmigkeitsverlaufes unterschiedlicher Torsionsschwingungsdämpfer;
- Fig. 4:: ein Kennliniendiagramm für den Torsionsschwingungsdämpfer mit einer Summenkennlinie, die sich aus zwei Kennlinien mit jeweils zwei unterschiedlichen Kennlinienabschnitten ergibt;
- Fig.5:: eine Nabenscheibe der abtriebsseitigen Energiespeichergruppe, aus Blickrichtung A in Fig. 1 betrachtet;
- Fig. 6:: die antriebsseitige Energiespeichergruppe mit zwei in Reihe geschalteten Energiespeichern unterschiedlicher Steifigkeiten;
- Fig. 7:: eine Drosselklappe zur Beeinflussung des Leistungsverhaltens eines vor der hydrodynamischen Kopplungsvorrichtung angeordneten Antriebs.

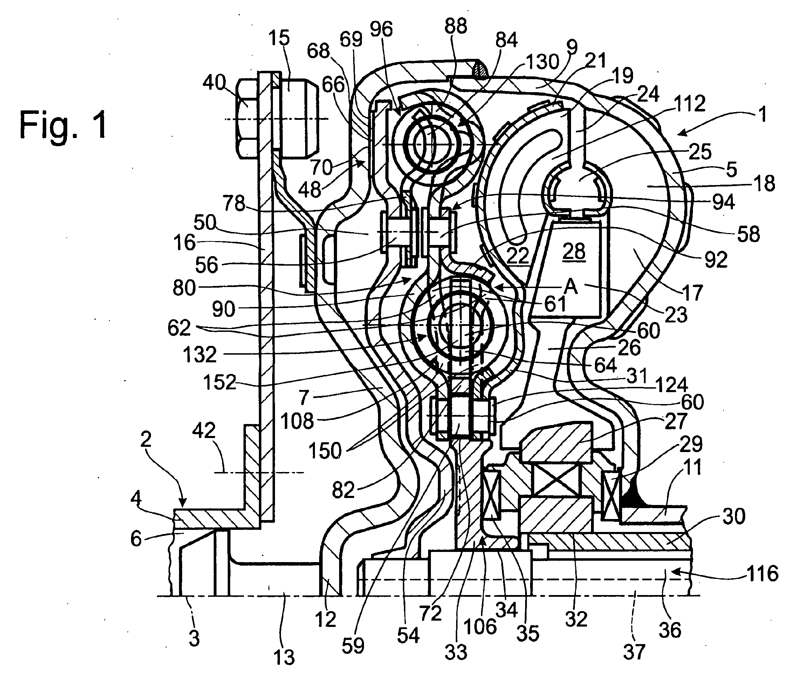

In Fig. 1 ist eine hydrodynamische Kupplungsanordnung 1 in Form eines hydrodynamischen Drehmomentwandlers dargestellt, der um eine Drehachse 3 Rotationsbewegungen auszuführen vermag. Die hydrodynamische Kupplungsanordnung 1 verfügt über ein Kupplungsgehäuse 5, das an seiner einem Antrieb 2, wie beispielsweise der Kurbelwelle 4 einer Brennkraftmaschine, zugewandten Seite, einen Gehäusedeckel 7 aufweist, der fest mit einer Pumpenradschale 9 verbunden ist. Diese geht im radial inneren Bereich in eine Pumpenradnabe 11 über.

Zurückkommend auf den Gehäusedeckel 7, weist dieser im radial inneren Bereich eine einen Lagerzapfen 13 tragende Zapfennabe 12 auf, wobei der Lagerzapfen 13 in bekannter Weise in einer Aussparung 6 der Kurbelwelle 4 zur antriebsseitigen Zentrierung des Kupplungsgehäuses 5 aufgenommen ist. Weiterhin verfügt der Gehäusedeckel 7 über eine Befestigungsaufnahme 15, die zur Befestigung des Kupplungsgehäuses 5 am Antrieb 2 dient, und zwar über die Flexplatte 16. Diese ist mittels Befestigungselementen 40 an der Befestigungsaufnahme 15 und mittels nur schematisch angedeuteten Befestigungselementen 42 an der Kurbelwelle 4 befestigt.

Die bereits erwähnte Pumpenradschale 9 bildet zusammen mit Pumpenradschaufeln 18 ein Pumpenrad 17, das mit einem eine Turbinenradschale 21 und Turbinenradschaufeln 22 aufweisenden Turbinenrad 19 sowie mit einem mit Leitradschaufeln 28 versehenen Leitrad 23 zusammenwirkt. Pumpenrad 17, Turbinenrad 19 und Leitrad 23 bilden in bekannter Weise einen hydrodynamischen Kreis 24, der einen Innentorus 25 umschließt.

Die Leitradschaufeln 28 des Leitrades 23 sind auf einer Leitradnabe 26 vorgesehen, die auf einem Freilauf 27 angeordnet ist. Der Letztgenannte stützt sich über eine Axiallagerung 29 an der Pumpenradnabe 11 axial ab und steht in drehfester, aber axial relativ verschiebbarer Verzahnung 32 mit einer Stützwelle 30, die radial innerhalb der Pumpenradnabe 11 angeordnet ist. Die als Hohlwelle ausgebildete Stützwelle 30 ihrerseits umschließt eine als abtriebsseitiges Bauteil 116 der hydrodynamischen Kupplungsvorrichtung 1 dienende Getriebeeingangswelle 36, die mit einer Mittenbohrung 37 zum Durchgang von Hydraulikflüssigkeit versehen ist. Die Getriebeeingangswelle 36 nimmt über eine Verzahnung 34 eine Torsionsdämpfernabe 33 drehfest, aber axial verschiebbar auf, wobei diese Torsionsdämpfernabe 33 zur relativ drehbaren Aufnahme eines Turbinenradfußes 31 dient. Die Torsionsdämpfernabe 33 stützt sich einerseits über eine Axiallagerung 35 am bereits genannten Freilauf 27 ab, und kommt andererseits über einen Kolben 54 einer Überbrückungskupplung 48 am Gehäusedeckel 7 zur Anlage.

Die bereits erwähnte Mittenbohrung 37 der Getriebeeingangswelle 36 dient zur Versorgung des hydrodynamischen Kreises 24 sowie zur Druckbeaufschlagung der Überbrückungskupplung 48, wozu eine Verbindung mit einer Steuervorrichtung und einem Hydraulikflüssigkeitsvorrat erforderlich ist. Weder die Steuervorrichtung noch der Hydraulikflüssigkeitsvorrat sind zeichnerisch dargestellt, können aber der Fig. 1 der DE 44 23 640 A1 entnommen werden und sind daher als inhaltlich in die vorliegende Patentanmeldung aufgenommen zu betrachten.

Über die Mittenbohrung 37 der Getriebeeingangswelle 36 eingeströmte Hydraulikflüssigkeit gelangt in eine Kammer 50, die axial zwischen dem Gehäusedeckel 7 und dem Kolben 54 der Überbrückungskupplung 48 angeordnet ist. Der Kolben 54 ist mit seiner von der Kammer 50 abgewandten Seite dem hydrodynamischen Kreis 24 zugewandt und in Abhängigkeit von den Druckverhältnissen im hydrodynamischen Kreis 24 sowie in der Kammer 50 zum Ein- oder Ausrücken der Überbrückungskupplung 48 zwischen zwei unterschiedlichen Grenzstellungen axial bewegbar.

Der Kolben 54 trägt in seinem radial äußeren Bereich an der dem Gehäusedeckel 7 zugewandten Seite einen Reibbelag 68, wobei durch diesen ein Reibbereich 69 bereitgestellt wird, der mit je einem Gegenreibbereich 70 am Gehäusedeckel 7 zusammenwirkt. Radial innerhalb des Reibbelages 68 ist am Kolben 54 mittels Vernietung 56 ein antriebsseitiges Übertragungselement 78 eines Torsionsschwingungsdämpfers 80 befestigt.

Das antriebsseitige Übertragungselement 78 verfügt über einen sich im Wesentlichen radial erstreckenden Bereich, der über nach radial außen greifende Ansteuerelemente 84 verfügt, die mit einer ersten Energiespeichergruppe 130, nachfolgend als antriebsseitige Energiespeichergruppe 130 bezeichnet, in Wirkverbindung versetzbar sind. Die antriebsseitige Energiespeichergruppe 130 verläuft im Wesentlichen in Umfangsrichtung und stützt sich anderenends an Ansteuerelementen 88 eines antriebsseitigen Deckbleches 90 ab, wobei dieses die antriebsseitige Energiespeichergruppe 130 auf einem Teil ihres Umfangs umfasst. Das antriebsseitige Deckblech 90 steht über eine Vernietung 58 sowie eine Verzapfung 59 in drehfester Verbindung mit einem abtriebsseitigen Deckblech 92, über die Verzapfung 59 darüber hinaus auch mit dem Turbinenradfuß 31. Die Deckbleche 90 und 92 dienen gemeinsam als Zwischen-Übertragungselement 94 des Torsionsschwingungsdämpfers 80. Die Verzapfung 59 dient in einer Zusatzfunktion als Bauteil einer Verdrehwinkelbegrenzung 124 zwischen den Deckblechen 90, 92 und einer mit der Torsionsdämpfernabe 33 drehfesten Nabenscheibe 82, indem die Verzapfung 59 in Umfangsaussparungen 72 eingreift, die in der Nabenscheibe 82 vorgesehen sind, und sich in Umfangsrichtung langlochförmig erstrecken. Die Umfangsaussparungen 72 lassen dadurch eine umfangsseitig begrenzte Relativbewegung der Verzapfung 59 in Umfangsrichtung zu. Die Nabenscheibe 82 bildet gemeinsam mit der Torsionsdämpfernabe 33 ein abtriebsseitiges Übertragungselement 106 des Torsionsschwingungsdämpfers 80.

Zurückkommend auf die als Zwischen-Übertragungselement 94 wirksamen Deckbleche 90, 92, sind diese radial zwischen Vernietung 58 und Verzapfung 59 mit Ausnehmungen 150 in Form von Federfenstern 62 für eine zweite Energiespeichergruppe 132, die nachfolgend als abtriebsseitige Energiespeichergruppe 132 bezeichnet ist, versehen, während die als abtriebsseitiges Übertragungselement 106 der abtriebsseitigen Dämpfungsvorrichtung 108 vorgesehene Nabenscheibe 82 mit Ansteuerelementen 60 für diese Energiespeichergruppe 132 ausgebildet ist, zwischen denen, in Umfangsrichtung gesehen, jeweils Ausnehmungen 152 in Form von Federfenstern 64 für die abtriebsseitige Energiespeichergruppe 132 vorgesehen sind.

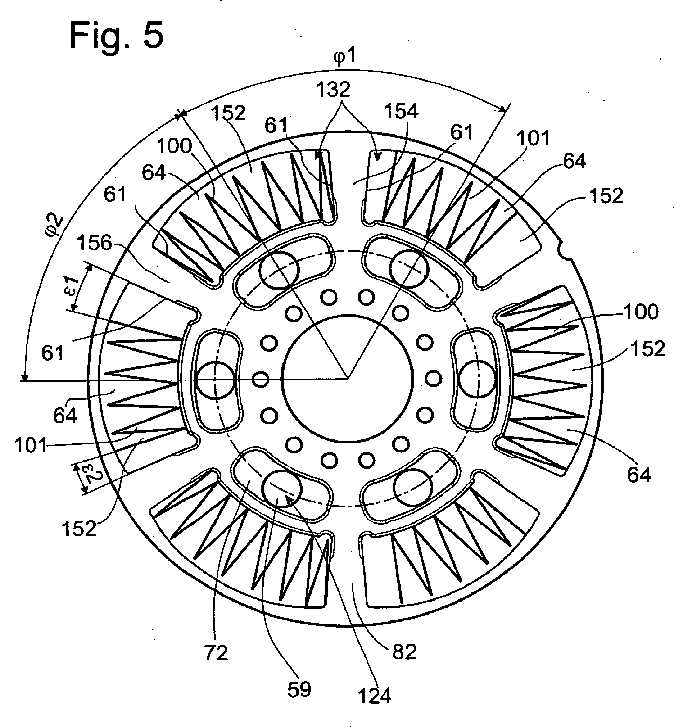

Die Ausnehmungen 150 im Zwischen-Übertragungselement 92 nehmen die Energiespeicher 100, 101 der abtriebsseitigen Energiespeichergruppe 132 in Umfangsrichtung jeweils beiderends anliegend auf. Auch die für die ersten Energiespeicher 100 der abtriebsseitigen Energiespeichergruppe 132 vorgesehenen Ausnehmungen 152 in der Nabenscheibe 82 nehmen diese ersten Energiespeicher 100 in Umfangsrichtung beiderends auf, so dass die Energiespeicher 100 von Beginn der Drehmomentübertragung an wirksam sein können. Im Gegensatz dazu sind die für die zweiten Energiespeicher 101 der abtriebsseitigen Energiespeichergruppe 132 vorgesehenen Ausnehmungen 152 in der Nabenscheibe 82 in Umfangsrichtung größer als diese Energiespeicher 101 ausgebildet, um gemäß Fig. 5 einen bei Zugbetrieb wirksamen Freidrehwinkel ε1 und einen bei Schubbetrieb wirksamen Freidrehwinkel ε2 zu ermöglichen, bevor die zweiten Energiespeicher 101 jeweils wirksam werden.

Die Federfenster 64 der Nabenscheibe 82 schließen, in Umfangsrichtung gesehen, Stege 154, 156 ein, die funktional als Ansteuerelemente 61 für die Energiespeicher 100, 101 der abtriebsseitigen Energiespeichergruppe 132 wirksam sind. Die ersten Energiespeicher 100 dieser Energiespeichergruppe 132 können über eine geringere Steifigkeit als die zweiten Energiespeicher 101 verfügen. Hierdurch bedingt, kann durch die zweiten Energiespeicher 101 an den diesen zugeordneten zweiten Stegen 156 eine höhere Spannung ausgelöst werden, als dies durch die ersten Energiespeicher 100 an deren Stegen 154 verursacht wird. Dieses Problem macht sich insbesondere bei Zugbetrieb unter Vollast bemerkbar, weshalb auch jeweils der in Zugrichtung benachbarte Steg 154, 156 in Zuordnung zum jeweiligen Energiespeicher 100, 101 ausgebildet ist. Aus diesem Grund werden die den ersten Energiespeichern 100 in Zugrichtung zugeordneten Federfenster 64 um einen vorbestimmten Winkelbetrag, vorzugsweise um etwa 1°, aneinander angenähert, während die in Zugrichtung mit zumindest einem der zweiten Energiespeicher 101 zusammen wirkenden Federfenster 64 um einen ebenfalls vorbestimmten Winkelbetrag, vorzugsweise um etwa 1 °, voneinander weiter beabstandet sind. Bei Annäherung der Federfenster 64 um etwa 1° aneinander entsteht ein geringerer Distanzwinkelbereich ϕ1, der bei der Anzahl von sechs Federfenstern den Wert von 59° annimmt und verschmalerte Stege 154 entstehen lässt, während bei Entfernung der Federfenster 64 um etwa 1° voneinander ein vergrößerter Distanzwinkelbereich ϕ2 gebildet wird, der bei der Anzahl von sechs Federfenstern den Wert von 61° annimmt und verbreiterte Stege 156 entstehen lässt. Aufgrund ihrer unterschiedlichen Breite sind die Festigkeiten der Stege 154, 156 gut an die sich aus den unterschiedlichen Steifigkeiten der Energiespeicher 100, 101 ergebenden unterschiedlichen Spannungen angepasst, so dass sich für die Stege 154, 156 jeweils eine spannungsoptimierte Umfangsbemessung ergibt.

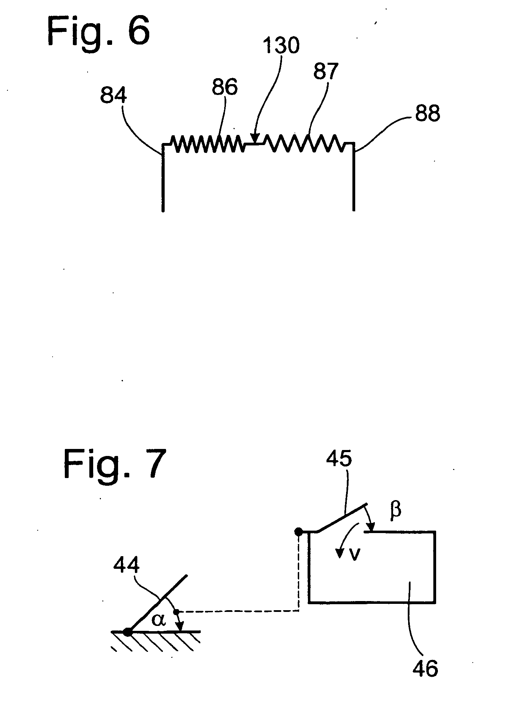

Zur antriebsseitigen Energiespeichergruppe 130 bleibt nachzutragen, dass diese gemäß Fig. 6 über Energiespeicher 86, 87 unterschiedlicher Steifigkeiten verfügt, wobei die Steifigkeit der ersten Energiespeicher 86 geringer ist als die Steifigkeit der zweiten Energiespeicher 87.

Aus dem antriebsseitigen Übertragungselement 78 soll in Verbindung mit der antriebsseitien Energiespeichergruppe 130 und dem Zwischen-Übertragungselement 94 eine antriebsseitige Dämpfungseinrichtung 96 des Torsionsschwingungsdämpfers 80 gebildet werden, aus dem Zwischen-Übertragungselement 94 zusammen mit der abtriebsseitigen Energiespeichergruppe 132 und dem abtriebsseitigen Übertragungselement 106 eine abtriebsseitige Dämpfungseinrichtung 108. Bei dem Torsionsschwingungsdämpfer 80 dient das Turbinenrad 19 als Masseelement 112, das wirkungsmäßig zwischen den beiden Dämpfungseinrichtungen 96 und 108 am Zwischen-Übertragungselement 94 angebunden ist.

Da für die antriebsseitige Dämpfungseinrichtung 96 das Zwischen-Übertragungselement 94 als abtriebsseitiges Bauteil wirksam ist, und dieses über die Verzapfung 59 mit dem Turbinenrad 19 in Festverbindung steht, wirkt die antriebsseitige Dämpfungseinrichtung 96 wie ein Standardtorsionsdämpfer, in Fachkreisen als Standard-TD bezeichnet (vgl. Fig. 3). Im Gegensatz dazu dient das Zwischen-Übertragungselement 94 bei der abtriebsseitigen Dämpfungseinrichtung 108 als antriebsseitiges Bauteil, während das abtriebsseitige Übertragungselement 106 dieser Dämpfungseinrichtung 108 zwar mit der Torsionsdämpfernabe 33 drehfest, gegenüber dem Turbinenrad 19 dagegen relativ drehbar ist. Insofern ist die abtriebsseitige Dämpfungseinrichtung 108 als Turbinentorsionsdämpfer TTD (Fig. 3) wirksam.

Damit sind bei dem in Fig. 1 gezeigten Torsionsschwingungsdämpfer 80 ein Standardtorsionsdämpfer und ein Turbinentorsionsdämpfer in einer Baueinheit in Reihe geschaltet und können sich demnach bezüglich ihrer jeweils spezifischen Wirkungen ergänzen. Es handelt sich somit gemäß Fig. 3 um einen ZDW.

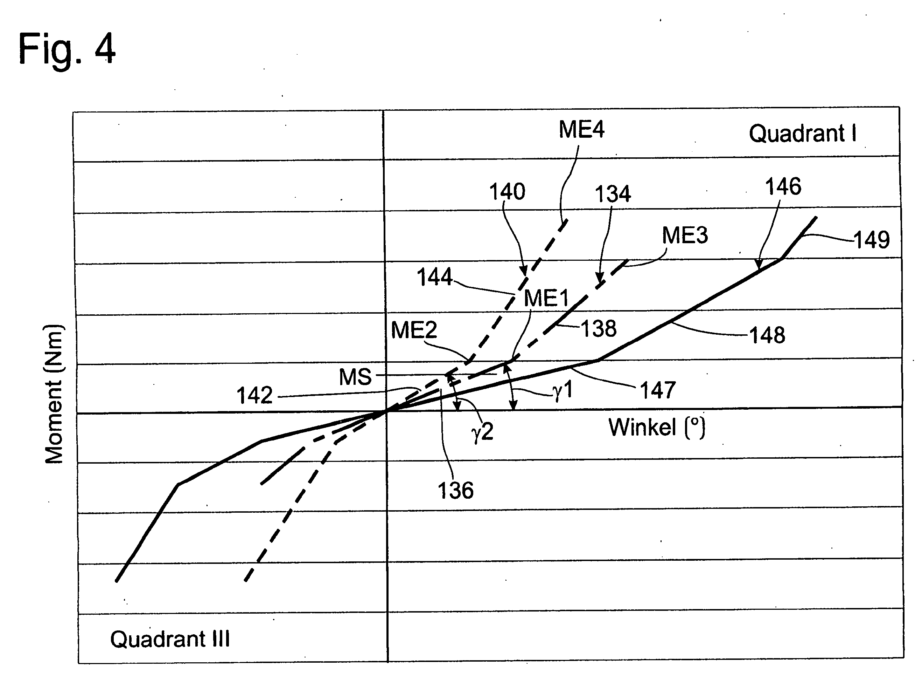

Fig. 4 zeigt ein Diagramm, bei welchem zur Darstellung von Kennlinien der Energiespeichergruppen 130, 132 das wirksame Drehmoment über dem zugeordneten Auslenkwinkel der Energiespeicher der Energiespeichergruppen aufgetragen ist, und zwar im Quadranten zur Darstellung bei Zugbetrieb und im Quadranten III zur Darstellung bei Schubbetrieb. In dem Diagramm ist eine der antriebsseitigen Energiespeichergruppe 130 zugeordnete erste Kennlinie 134 in strichpunktierter Ausführung dargestellt, eine der abtriebsseitigen Energiespeichergruppe 132 zugeordnete zweite Kennlinie 140 in gestrichelter Ausführung, und eine durch Überlagerung beider Kennlinien 134, 140 gebildete Summenkennlinie 146 in unterbrechungsfreier Ausführung.

In Fig. 4 ist, die Situation im Zugbetrieb betrachtend, die der antriebsseitigen Energiespeichergruppe 130 zugeordnete erste Kennlinie 134 mit einem ersten Kennlinienabschnitt 136 und mit einem sich daran anschließenden zweiten Kennlinienabschnitt 138 versehen, wobei der erste Kennlinienabschnitt 136 den ersten Energiespeichern 86 und der zweite Kennlinienabschnitt 138 den zweiten Energiespeichern 87 der antriebsseitigen Energiespeichergruppe 130 zugeordnet ist. Ebenso ist die der abtriebsseitigen Energiespeichergruppe 132 zugeordnete zweite Kennlinie 140 mit einem ersten Kennlinienabschnitt 142 und mit einem sich daran anschließenden zweiten Kennlinienabschnitt 144 versehen, wobei der erste Kennlinienabschnitt 142 den ersten Energiespeichern 100 und der zweite Kennlinienabschnitt 144 den zweiten Energiespeichern 101 der abtriebsseitigen Energiespeichergruppe 132 zugeordnet ist.

Wie sich aus dem geringerem Steigungswinkel γ1 des ersten Kennlinienabschnittes 136 der ersten Kennlinie 134 im Vergleich zum Steigungswinkel γ2 des ersten Kennlinienabschnittes 142 der zweiten Kennlinie 140 ergibt, sind die ersten Energiespeicher 86 der antriebsseitigen Energiespeichergruppe 130 von geringerer Steifigkeit als die ersten Energiespeicher 100 der abtriebsseitigen Energiespeichergruppe 132. Für das Steifigkeitsverhältnis SV der ersten Energiespeicher 86 der antriebsseitigen Energiespeichergruppe 130 zu den ersten Energiespeichern 100 der abtriebsseitigen Energiespeichergruppe 132 wurde herausgefunden, dass sich in einem Bereich für dieses Steifigkeitsverhältnis von 0,3 bis 1,0 ein besonders vorteilhaftes Dämpfungsverhalten für den Torsionsschwingungsdämpfer 80 einstellt.

Da der Übergang beider erster Kennlinienabschnitte 136 und 142 zu den jeweils zweiten Kennlinienabschnitte 138, 144 jeweils in der gleichen Größenordnung des Drehmomentes vollzieht, ME1 demnach gleich ME2 ist, weist auch die resultierende Summenkennlinie 146 bei diesem Drehmoment einen Übergang auf, und zwar von einem ersten Summenkennlinienabschnitt 147 auf einen zweiten Summenkennlinienabschnitt 148. Auf diesen folgt wiederum ein dritter Summenkennlinienabschnitt 149, der sich aus einem gegenüber dem zweiten Kennlinienabschnitt 138 der ersten Kennlinie 134 zu einem höheren Drehmomentwert verlängerten zweiten Kennlinienabschnitt 144 der zweiten Kennlinie 140 ergibt. Die drei Summenkennlinienabschnitte 147, 148 und 149 können jeweils mittels einer geringen Diskontinuität ineinander übergehen, wobei sich eine derartige Diskontinuität in einer Verlagerung der Eigenfrequenz des Torsionsschwingungsdämpfers 80 zu einer höheren Drehzahl bemerkbar machen kann. Dieser Situation kann allerdings dadurch abgeholfen werden, dass die jeweiligen Enden ME1 und ME2 der jeweils ersten Kennlinienabschnitte 136, 142 beider Kennlinien 130, 132 jeweils um einen vorbestimmten Betrag von etwa 10% bis 30% oberhalb eines statischen Drehmomentes MS eingestellt werden, so dass selbst stärkere Torsionsschwingungen, sollten diese dem statischen Drehmoment MS überlagert werden, nicht zum Erreichen der Drehmomentenwerte ME1 und ME2 führen und damit einen Wechsel zwischen den beiden Kennlinienabschnitten 136 und 138 zum einen sowie zwischen den beiden Kennlinienabschnitten 142 und 144 zum anderen bedingen. Das Risiko für einen derartigen Betriebszustand ist am größten, wenn die Überbrückungskupplung 48 im verbrauchsrelevanten Teillastbereich bei geringer Drehzahl, also bei etwa 1000 Umdrehungen pro Minute, bereits eingerückt und ein dem Antrieb 2 zugeordnetes, in Fig. 7 gezeigtes Fahrpedal 44 um einen Winkel α betätigt ist, bei welchem eine nachgeordnete Drosselklappe 45 einer Gemischaufbereitungsstation 46 um einen Winkel β geöffnet ist. Der Winkel β kann bei diesem energiesparenden Modus einem Bereich von etwa 30% bis 80% der Auslenkweite der Drosselklappe 45 liegen.

Bei dieser Ausführung der Energiespeichergruppen 130, 132 des Torsionsschwingungsdämpfers 80 sind also die jeweils ersten Energiespeicher 86, 100 der beiden Energiespeichergruppen 130, 132 nacheinander wirksam, bevor die jeweils zweiten Energiespeicher 88, 101 der beiden Energiespeichergruppen 130, 132 aufeinanderfolgend aktiviert werden.

### Bezugszeichenliste

- 1: hydrod. Kupplungsanordnung
- 2: Antrieb
- 3: Drehachse
- 4: Kurbelwelle
- 5: Kupplungsgehäuse
- 6: Aussparung
- 7: Gehäusedeckel
- 9: Pumpenradschale
- 11: Pumpenradnabe
- 12: Zapfennabe
- 13: Lagerzapfen
- 15: Befestigungsaufnahme
- 16: Flexplate
- 17: Pumpenrad
- 18: Pumpenradschaufeln
- 19: Turbinenrad
- 21: Turbinenradschale
- 22: Turbinenradschaufeln
- 23: Leitrad
- 24: hydrodyn. Kreis
- 25: Innentorus
- 26: Leitradnabe
- 27: Freilauf
- 28: Leitradschaufeln
- 29: Axiallagerung
- 30: Stützwelle
- 31: Turbinenradfuß
- 32: Verzahnung
- 33: Torsionsdämpfernabe
- 34: Verzahnung
- 35: Axiallagerung
- 36: Getriebeeingangswelle
- 37: Mittenbohrung
- 38: Abdichtung
- 40, 42: Befestigungselemente
- 44: Fahrpedal
- 45: Drosselklappe
- 46: Gemischaufbereitungsbereich
- 48: Überbrückungskupplung
- 50: Kammer
- 54: Kolben
- 56: Vernietung
- 58: Vernietung
- 59: Verzapfung
- 60, 61: Ansteuerelemente
- 62, 64: Federfenster
- 66: Reibbelagträger
- 68: Reibbeläge
- 69: Reibbereich
- 70: Gegenreibbereich
- 72: Umfangsaussparungen
- 78: antriebss. Übertragungselement
- 80: Torsionsschwingungsdämpfer
- 82: radial äußere Nabenscheibe
- 84: Ansteuerelemente
- 86: erste Energiespeicher
- 87: zweite Energiespeicher
- 88: Ansteuerelemente
- 90,92: Deckbleche
- 94: Zwischen-Übertragungselement
- 96: antriebss. Dämpfungseinrichtung
- 100: erste Energiespeicher
- 101: zweite Energiespeicher
- 104: radial innere Nabenscheibe
- 106: abtriebss. Übertragungselement
- 108: abtriebss. Dämpfungseinrichtung
- 112: Masseelement
- 116: abtriebss. Bauteil
- 124: Verdrehwinkelbegrenzung
- 130: antriebsseitige Energiespeichergruppe
- 132: abtriebsseitige Energiespeichergruppe
- 134: erste Kennlinie
- 136: erster Kennlinienabschnitt
- 138: zweiter Kennlinienabschnitt
- 140: zweite Kennlinie
- 142: erster Kennlinienabschnitt
- 144: zweiter Kennlinienabschnitt
- 146: Summenkennlinie
- 147: erster Summenkennlinienabschnitt
- 148: zweiter Summenkennlinienabschnitt
- 149: dritter Summenkennlinienabschnitt
- 150: Ausnehmungen des Zwischen-Übertragungselementes
- 152: Ausnehmungen des abtriebsseitigen Übertragungselementes
- 154, 156: Stege

## Patentansprüche

1. Torsionsschwingungsdämpfer (80) an einer Überbrückungskupplung (48) einer hydrodynamischen Kopplungsanordnung (1), die zur Bildung eines hydrodynamischen Kreises (24) zumindest ein Pumpenrad (17) und ein Turbinenrad (19) aufweist, mit einer antriebsseitigen Dämpfungsvorrichtung (96), die mit dem Gehäuse (5) der Kopplungsanordnung (1) in Wirkverbindung bringbar und mit einem antriebsseitigen Übertragungselement (78) versehen ist, das über eine antriebsseitige Energiespeichergruppe (130) mit einem Zwischen-Übertragungselement (94) verbunden ist, und mit einer abtriebsseitigen Dämpfungsvorrichtung (108) für eine Wirkverbindung des Zwischen-Übertragungselementes (94) über eine abtriebsseitige Energiespeichergruppe (132) mit einem abtriebsseitigen Übertragungselement (106), das mit einem abtriebsseitigen Bauteil (116) der hydrodynamischen Kopplungsanordnung (1) verbunden ist, wobei zumindest zwei Energiespeichergruppen (130; 132) über wenigstens zwei unterschiedliche Energiespeicher (86, 87; 100; 101) zur Erzeugung einer Kennlinie (134; 140) mit mindestens zwei Kennlinienabschnitten (136, 138; 142, 144) verfügen, und zwischen ersten Energiespeichern (86) einer ersten Energiespeichergruppe (130) und ersten Energiespeichern (100) einer zweiten Energiespeichergruppe (132) ein vorbestimmtes Steifigkeitsverhältnis (SV) gebildet wird, wobei jeweils die ersten Energiespeicher (86) der ersten Energiespeichergruppe (130) zumindest im wesentlichen eine geringere Steifigkeit als die jeweils ersten Energiespeicher (100) der zweiten Energiespeichergruppe (132) aufweisen,
**dadurch gekennzeichnet, dass**
das Zwischen-Übertragungselement (94) drehfest mit dem Turbinenrad (19) verbunden ist, das relativ drehbar an dem abtriebsseitigen Übertragungselement (106) der abtriebsseitigen Dämpfungsvorrichtung (108) angreift, wobei das abtriebsseitige Übertragungselement (106) drehfest mit dem abtriebsseitigen Bauteil (116) verbunden ist, und
der zweite Kennlinienabschnitt (138) der Kennlinie (134) der mit geringerer Steifigkeit ausgebildeten Energiespeichergruppe (130) zumindest im wesentlichen bei einem Momentenbetrag (ME3) endet, der zwischen 80% und 100% des vom Antrieb (2) erzeugten Momentes liegt, während der zweite Kennlinienabschnitt (144) der Kennlinie (140) der mit höherer Steifigkeit ausgebildeten Energiespeichergruppe (132) zumindest im wesentlichen bei einem Momentenbetrag (ME4) endet, der zwischen 110% und 120% des vom Antrieb (2) erzeugten Momentes liegt.

2. Torsionsschwingungsdämpfer nach Anspruch 1,
**dadurch gekennzeichnet,**
**dass** die jeweils ersten Kennlinienabschnitte (136, 142) der Kennlinien (134, 140) beider Energiespeichergruppen (130, 132) zumindest im wesentlichen bei jeweils dem gleichen Momentenbetrag (ME) enden.

3. Torsionsschwingungsdämpfer nach Anspruch 1,
**dadurch gekennzeichnet,**
**dass** es sich bei der ersten Energiespeichergruppe (130) um die antriebsseitige Energiespeichergruppe (130) und bei der zweiten Energiespeichergruppe (132) um die abtriebsseitige Energiespeichergruppe (132) handelt.

4. Torsionsschwingungsdämpfer nach Anspruch 1, 2 oder 3,
**dadurch gekennzeichnet,**
**dass** die jeweils ersten Energiespeicher (86, 100) beider Energiespeichergruppen (130, 132) bezüglich des Verlaufs ihres jeweils ersten Kennlinienabschnittes (136, 142) auf den Teillastbereich des Antriebes (2) mit Stellung einer Drosselklappe (146) innerhalb eines Bereiches von im wesentlichen 25% bis 50% abgestimmt sind.

5. Torsionsschwingungsdämpfer nach einem der Ansprüche 1 bis 3,
**dadurch gekennzeichnet,**
**dass** der Kennlinienabschnitt (136) der jeweils ersten Energiespeicher (86, 100) der Energiespeichergruppen (130, 132) jeweils in einem Momentenbereich (ME) endet, der um einen vorbestimmten Betrag oberhalb des bei der bevorzugten Stellung der Drosselklappe (45) vom Antrieb (2) gelieferten statischen Drehmomentes (MS) liegt.

6. Torsionsschwingungsdämpfer nach Anspruch 5,
**dadurch gekennzeichnet,**
**dass** der Kennlinienabschnitt (136) der jeweils ersten Energiespeicher (86, 87) beider Energiespeichergruppen (130, 132) in einem Momentenbereich (ME) endet, der mindestens um einen zwischen 10% und 30% liegenden vorbestimmten Betrag oberhalb des bei der bevorzugten Stellung der Drosselklappe (45) vom Antrieb (2) gelieferten statischen Drehmomentes (MS) eingestellt ist.

7. Torsionsschwingungsdämpfer nach einem der Ansprüche 1 bis 6, bei welchem die zur Aufnahme der Energiespeicher (100, 101) vorgesehenen Ausnehmungen (150) des Zwischen-Übertragungselementes (94) sowie die entsprechenden Ausnehmungen (152) des abtriebsseitigen Übertragungselementes (106) der abtriebsseitigen Dämpfungsvorrichtung (108) zur Erzeugung unterschiedlich breiter Stege (154, 156) zwischen jeweils zwei Ausnehmungen (150, 152) mit unterschiedlichen Distanzwinkelbereichen (ϕ1, ϕ2) zueinander ausgebildet sind, wobei diejenigen Ausnehmungen (150, 152), die zur Aufnahme der dem ersten Kennlinienabschnitt (142) zugeordneten Energiespeicher (86) dienen, zur Bildung eines schmäleren Steges (154) durch einen geringeren Distanzwinkelbereich (ϕ1) voneinander beabstandet sind als diejenigen Ausnehmungen (150, 152), die zur Aufnahme der dem zweiten Kennlinienabschnitt (144) zugeordneten Energiespeicher (101) vorgesehen sind, und zur Bildung eines breiteren Steges (156) durch einen größeren Distanzwinkelbereich (ϕ2) voneinander beabstandet sind
**dadurch gekennzeichnet,**
**dass** die durch einen geringeren Distanzwinkelbereich (ϕ1) voneinander beabstandeten Ausnehmungen (150, 152) in Bezug zu einer Ausführung mit in gleichen Distanzwinkelbereichen voneinander beabstandeten Ausnehmungen um einen Winkelbetrag von maximal 5° aufeinander zu gerückt sind, während die durch einen größeren Distanzwinkelbereich (ϕ2) voneinander beabstandeten Ausnehmungen (150, 152) in Bezug zu einer Ausführung mit in gleichen Distanzwinkelbereichen voneinander beabstandeten Ausnehmungen (150, 152) um den Winkelbetrag von maximal 5° voneinander weg gerückt sind.

8. Torsionsschwingungsdämpfer nach Anspruch 7,
**dadurch gekennzeichnet,**
**dass** die durch einen geringeren Distanzwinkelbereich (ϕ1) voneinander beabstandeten Ausnehmungen (150, 152) in Bezug zu einer Ausführung mit in gleichen Distanzwinkelbereichen voneinander beabstandeten Ausnehmungen um einen Winkelbetrag von zumindest im wesentlichen 1° aufeinander zu gerückt sind, während die durch einen größeren Distanzwinkelbereich (ϕ2) voneinander beabstandeten Ausnehmungen (150, 152) in Bezug zu einer Ausführung mit in gleichen Distanzwinkelbereichen voneinander beabstandeten Ausnehmungen (150, 152) um den Winkelbetrag von zumindest im wesentlichen 1° voneinander weg gerückt sind.

## Claims

1. Torsional vibration damper (80) on a lock-up clutch (48) of a hydrodynamic coupling arrangement (1) which, in order to form a hydrodynamic circuit (24), has at least one impeller (17) and one turbine wheel (19), having a drive-side damping apparatus (96) which can be brought into operative connection with the housing (5) of the coupling arrangement (1) and is provided with a drive-side transmission element (78) which is connected to an intermediate transmission element (94) via a drive-side energy storage group (130), and having an output-side damping apparatus (108) for an operative connection of the intermediate transmission element (94) via an output-side energy storage group (132) to an output-side transmission element (106) which is connected to an output-side component (116) of the hydrodynamic coupling arrangement (1), at least two energy storage groups (130; 132) having at least two different energy stores (86, 87; 100; 101) for producing a characteristic curve (134; 140) with at least two characteristic-curve sections (136, 138; 142, 144), and a predefined rigidity ratio (SV) being formed between first energy stores (86) of a first energy storage group (130) and first energy stores (100) of a second energy storage group (132), in each case the first energy stores (86) of the first energy storage group (130) having at least substantially a lower rigidity than the respectively first energy stores (100) of the second energy storage group (132), **characterized in that** the intermediate transmission element (94) is connected for conjoint rotation to the turbine wheel (19) which acts in a relatively rotatable manner on the output-side transmission element (106) of the output-side damping apparatus (108), the output-side transmission element (106) being connected for conjoint rotation to the output-side component (116), and the second characteristic-curve section (138) of the characteristic curve (134) of the energy storage group (130) which is configured with a lower rigidity ends at least substantially at a moment amount (ME3) which lies between 80% and 100% of the moment which is generated by the drive (2), whereas the second characteristic-curve section (144) of the characteristic curve (140) of the energy storage group (132) which is configured with a higher rigidity ends at least substantially at a moment amount (ME4) which lies between 110% and 120% of the moment which is generated by the drive (2).

2. Torsional vibration damper according to Claim 1, **characterized in that** the respectively first characteristic-curve sections (136, 142) of the characteristic curves (134, 140) of both energy storage groups (130, 132) end at least substantially at in each case the same moment amount (ME).

3. Torsional vibration damper according to Claim 1, **characterized in that** the first energy storage group (130) is the drive-side energy storage group (130) and the second energy storage group (132) is the output-side energy storage group (132).

4. Torsional vibration damper according to Claim 1, 2 or 3, **characterized in that**, with regard to the profile of their respectively first characteristic-curve section (136, 142), the respectively first energy stores (86, 100) of both energy storage groups (130, 132) are adapted to the part-load range of the drive (2) with a position of a throttle valve (146) within a range from substantially 25% to 50%.

5. Torsional vibration damper according to one of Claims 1 to 3, **characterized in that** the characteristic-curve section (136) of the respectively first energy stores (86, 100) of the energy storage groups (130, 132) ends in each case in a moment range (ME) which lies by a predefined amount above the static torque (MS) which is delivered by the drive (2) in the case of the preferred position of the throttle valve (45).

6. Torsional vibration damper according to Claim 5, **characterized in that** the characteristic-curve section (136) of the respectively first energy stores (86, 87) of both energy storage groups (130, 132) ends in each case in a moment range (ME) which is set at least by a predefined amount which lies between 10% and 30% above the static torque (MS) which is delivered by the drive (2) in the case of the preferred position of the throttle valve (45).

7. Torsional vibration damper according to one of Claims 1 to 6, in which those recesses (150) of the intermediate transmission element (94) which are provided for receiving the energy stores (100, 101) and the corresponding recesses (152) of the output-side transmission element (106) of the output-side damping apparatus (108) are configured for producing webs (154, 156) of different widths between in each case two recesses (150, 152) having different spacing angular ranges (ϕ1, ϕ2), those recesses (150, 152) which serve to receive the energy stores (86) which are assigned to the first characteristic-curve section (142), are spaced apart from one another, in order to form a narrower web (154), by a smaller spacing angular range (ϕ1) than those recesses (150, 152) which are provided for receiving the energy stores (101) which are assigned to the second characteristic-curve section (144), and are spaced apart from one another by a larger spacing angular range (ϕ2) in order to form a wider web (156), **characterized in that** the recesses (150, 152) which are spaced apart from one another by a smaller spacing angular range (ϕ1) are moved toward one another by an angular amount of at most 5° in relation to an embodiment having recesses which are spaced apart from one another in identical spacing angular ranges, whereas the recesses (150, 152) which are spaced apart from one another by a larger spacing angular range (ϕ2) are moved away from one another by the angular amount of at most 5° in relation to an embodiment having recesses (150, 152) which are spaced apart from one another in identical spacing angular ranges.

8. Torsional vibration damper according to Claim 7, **characterized in that** the recesses (150, 152) which are spaced apart from one another by a smaller spacing angular range (ϕ1) are moved toward one another by an angular amount of at least substantially 1° in relation to an embodiment having recesses which are spaced apart from one another in identical spacing angular ranges, whereas the recesses (150, 152) which are spaced apart from one another by a larger spacing angular range (ϕ2) are moved away from one another by the angular amount of at least substantially 1° in relation to an embodiment having recesses (150, 152) which are spaced apart from one another in identical spacing angular ranges.

## Revendications

1. Amortisseur de vibrations torsionnelles (80) d'un accouplement de pontage de convertisseur (48) d'un agencement d'accouplement hydrodynamique (1), qui présente, pour former un circuit hydrodynamique (24), au moins une roue de pompe (17) et une roue de turbine (19), avec un dispositif d'amortissement (96) du côté de l'entraînement, lequel peut être amené en liaison coopérante avec le boîtier (5) de l'agencement d'accouplement (1) et étant pourvu d'un élément de transfert (78) du côté de l'entraînement, lequel est connecté par le biais d'un groupe d'accumulateur d'énergie du côté de l'entraînement (130) à un élément de transfert intermédiaire (94), et avec un dispositif d'amortissement du côté de la sortie (108) pour une liaison fonctionnelle de l'élément de transfert intermédiaire (94) par le biais d'un groupe d'accumulateur d'énergie du côté de la sortie (132) à un élément de transfert du côté de la sortie (106), qui est connecté à un composant du côté de la sortie (116) de l'agencement d'accouplement hydrodynamique (1), au moins deux groupes d'accumulateur d'énergie (130 ; 132) disposant d'au moins deux accumulateurs d'énergie différents (86, 87 ; 100 ; 101) pour produire une caractéristique (134 ; 140) avec au moins deux portions de caractéristique (136, 138 ; 142, 144), et un rapport de raideur prédéterminé (SV) étant formé entre des premiers accumulateurs d'énergie respectifs (86) d'un premier groupe d'accumulateurs d'énergie (130) et des premiers accumulateurs d'énergie (100) d'un deuxième groupe d'accumulateurs d'énergie (132), les premiers accumulateurs d'énergie respectifs (86) du premier groupe d'accumulateurs d'énergie (130) présentant au moins essentiellement une plus faible raideur que les premiers accumulateurs d'énergie respectifs (100) du deuxième groupe d'accumulateurs d'énergie (132),
**caractérisé en ce que**
l'élément de transfert intermédiaire (94) est connecté de manière solidaire en rotation à la roue de turbine (19), qui vient en prise de manière relativement rotative sur l'élément de transfert du côté de la sortie (106) du dispositif d'amortissement du côté de la sortie (108), l'élément de transfert du côté de la sortie (106) étant connecté de manière solidaire en rotation au composant du côté de la sortie (116), et
la deuxième portion de caractéristique (138) de la caractéristique (134) du groupe d'accumulateurs d'énergie (130) réalisé avec une plus faible raideur se termine au moins essentiellement à une valeur de couple (ME3) qui est comprise entre 80% et 100% du couple produit par l'entraînement (2), tandis que la deuxième portion de caractéristique (144) de la caractéristique (140) du groupe d'accumulateurs d'énergie (132) réalisé avec une plus grande raideur se termine au moins essentiellement à une valeur de couple (ME4) qui se situe entre 110% et 120% du couple produit par l'entraînement (2).

2. Amortisseur de vibrations torsionnelles selon la revendication 1,
**caractérisé en ce que**
les premières portions de caractéristique respectives (136, 142) des caractéristiques (134, 140) des deux groupes d'accumulateurs d'énergie (130, 132) se terminent au moins essentiellement à chaque fois à la même valeur de couple (ME).

3. Amortisseur de vibrations torsionnelles selon la revendication 1,
**caractérisé en ce que**
le premier groupe d'accumulateurs d'énergie (130) est le groupe d'accumulateurs d'énergie du côté de l'entraînement (130) et le deuxième groupe d'accumulateurs d'énergie (132) est le groupe d'accumulateurs d'énergie (132) du côté de la sortie.

4. Amortisseur de vibrations torsionnelles selon la revendication 1, 2 ou 3,
**caractérisé en ce que**
les premiers accumulateurs d'énergie respectifs (86, 100) des deux groupes d'accumulateurs d'énergie (130, 132) sont adaptés en termes de courbe de leur première portion de caractéristique respective (136, 142) sur la région de charge partielle de l'entraînement (2) à la position d'un clapet d'étranglement (146) à l'intérieur d'une plage comprise essentiellement entre 25% et 50%.

5. Amortisseur de vibrations torsionnelles selon l'une quelconque des revendications 1 à 3,
**caractérisé en ce que**
la portion de caractéristique (136) de chaque premier accumulateur d'énergie (86, 100) des groupes d'accumulateurs d'énergie (130, 132) se termine à chaque fois dans une plage de couples (ME) qui se situe à une valeur prédéterminée au-dessus du couple (MS) statique fourni par l'entraînement (2) dans la position préférée du clapet d'étranglement (45).

6. Amortisseur de vibrations torsionnelles selon la revendication 5,
**caractérisé en ce que**
la portion de caractéristique (136) de chaque premier accumulateur d'énergie (86, 87) des deux groupes d'accumulateurs d'énergie (130, 132) se termine dans une plage de couple (ME) qui est ajustée d'au moins une valeur prédéterminée comprise entre 10% et 30% au-dessus du couple (MS) statique fourni par l'entraînement (2) dans la position préférée du clapet d'étranglement (45).

7. Amortisseur de vibrations torsionnelles selon l'une quelconque des revendications 1 à 6, dans lequel les évidements (150) de l'élément de transfert intermédiaire (94) prévus pour recevoir les accumulateurs d'énergie (100, 101) ainsi que les évidements correspondants (152) de l'élément de transfert du côté de la sortie (106) du dispositif d'amortissement du côté de la sortie (108) sont réalisés avec des plages angulaires d'espacement différentes (ϕ₁, ϕ₂) pour produire des nervures de largeurs différentes (154, 156) entre deux évidements respectifs (150, 152), les évidements (150, 152) qui servent à recevoir les accumulateurs d'énergie (86) associés à la première portion de caractéristique (142) étant espacés l'un de l'autre, pour former une nervure (154) plus étroite, d'une plus faible plage angulaire d'espacement (ϕ₁) que les évidements (150, 152) qui sont prévus pour recevoir les accumulateurs d'énergie (101) associés à la deuxième portion de caractéristique (144), et qui sont espacés l'un de l'autre, pour former une nervure (156) plus large, d'une plus grande plage angulaire d'espacement (ϕ₂),
**caractérisé en ce que**
les évidements (150, 152) espacés l'un de l'autre d'une plus faible plage angulaire d'espacement (ϕ₁) étant déplacés l'un vers l'autre d'une valeur angulaire de 5° au maximum par rapport à une réalisation avec des évidements espacés l'un de l'autre de mêmes plages angulaires d'espacement, tandis que les évidements (150, 152) espacés l'un de l'autre d'une plus grande plage angulaire d'espacement (ϕ₂) sont déplacés à l'écart l'un de l'autre d'une valeur angulaire de 5° au maximum par rapport à une réalisation avec des évidements (150, 152) espacés l'un de l'autre de mêmes plages angulaires d'espacement.

8. Amortisseur de vibrations torsionnelles selon la revendication 7,
**caractérisé en ce que**
les évidements (150, 152) espacés l'un de l'autre d'une plus faible plage angulaire d'espacement (ϕ₁) sont déplacés l'un vers l'autre d'une valeur angulaire d'au moins essentiellement 1° par rapport à une réalisation avec des évidements espacés l'un de l'autre de mêmes plages angulaires d'espacement, tandis que les évidements (150, 152) espacés l'un de l'autre d'une plus grande plage angulaire d'espacement (ϕ₂) sont déplacés à l'écart l'un de l'autre d'une valeur angulaire d'au moins essentiellement 1° par rapport à une réalisation avec des évidements (150, 152) espacés l'un de l'autre de mêmes plages angulaires d'espacement.
